# EUROPEAN PATENT APPLICATION

(11) **EP 2 838 062 A1**
(43) Date of publication of application: **18.02.2015**
(21) Application number: 14180584.6
(22) Date of filing: 11.08.2014
(51) Int. Cl.: G06Q 30/02, G06Q 10/10

(54) **Search results with common interest information**

(30) Priority: 14.08.2013 KR 20130096789
(71) Applicant: Samsung Electronics Co., Ltd, Gyeonggi-do 443-742 (KR)
(72) Inventor: Park, Jin, Gyeonggi-do 443-742 (KR)
(74) Representative: Gover, Richard Paul

(57) **Abstract**

Disclosed herein are an electronic device and method of providing relevant search results to queries. Identification information of at least one remote electronic device having activity history stored therein that is relevant to the search query is obtained. Common interest member information comprising the activity history and the identification information is displayed.

## Description

### BACKGROUND OF THE DISCLOSURE

### 1. Field

The present disclosure relates generally to providing relevant search information

### 2. Description of Related Art

An electronic device may include a communication module supporting a communication function. The electronic device may form a communication channel with another electronic device or may be connected to a service device providing particular information. When the electronic device is connected to the service device, the electronic device may output a screen provided by the service device. The electronic device may search for information sought after by a user from among pieces of information provided by the service device.

### SUMMARY

However, users may find it difficult ensure the reliability of the service device providing the information sought after by the user. The user may simply defer to the information provided by the service device.

Accordingly, various examples of the present disclosure provide a method and an apparatus for providing search results to queries. The results may include information sought after by the user and information associated with other users that may have searched for information relevant to the query.

In accordance with an aspect of the present disclosure, an electronic device is provided. The electronic device may include: a processor to: detect input of a search query using an input module; obtain identification information associated with a remote electronic device having stored therein activity history relevant to the query; and configure common interest member information comprising the identification information , the relevant activity history of the remote electronic device, and a particular function associated with the common interest member information; and display search results on a dislpay module, the search results comprising the common interest member information on a display module.

In accordance with another aspect of the present disclosure, a method of providing search relevant information is provided. The method may include: detecting input of a search query; obtaining identification information of at least one remote electronic device having activity history stored therein that is relevant to the search query; gathering common interest member information comprising the activity history and the identification information; and displaying search results based on the common interest member information. Various examples of the present disclosure may improve the reliability of search results returned to a user. Furthermore, examples of the present disclosure support more intuitive and rapid identification of search relevant information. Moreover, various examples of the present disclosure enhance the efficiency of an electronic service and allow the user to quickly determine which electronic service to use based on an exchange of relevant information with remote electronic devices.

### BRIEF DESCRIPTION OF THE DRAWINGS

The above features and advantages of the present disclosure will be more apparent from the following detailed description in conjunction with the accompanying drawings, in which:
FIG. 1 illustrates an example configuration of a system in accordance with aspects of the present disclosure;
FIG. 2 illustrates an example electronic device in accordance with aspects of the present disclosure;
FIG. 3 illustrates an example configuration of a first control module in accordance with aspects of the present disclosure;
FIG. 4 illustrates an example SNS supporting device in accordance with aspects of the present disclosure;
FIG. 5 illustrates an example second control module in accordance with aspects of the present disclosure;
FIG. 6 is a flowchart illustrating an example method of operating an electronic device in accordance with aspects of the present disclosure;
FIG. 7 illustrates an example signal flow between components of the system in accordance with aspects of the present disclosure;
FIG. 8 illustrates a working example of a common interest screen in accordance with aspects of the present disclosure;
FIG. 9 illustrates a further working example of a common interest screen in accordance with aspects of the present disclosure;
FIG. 10 illustrates yet another working example of a common interest screen in accordance with aspects of the present disclosure; and
FIG. 11 illustrates another working example of a common interest screen in accordance with aspects of the present disclosure.

### DETAILED DESCRIPTION

Hereinafter, examples of the present disclosure will be described in detail with reference to the accompanying drawings. For the purposes of clarity and simplicity, technical contents that are well known will be omitted. Also, description of elements that are substantially identical to other elements already described will also be omitted.

In the accompanying drawings, some elements may be exaggerated, omitted, or schematically illustrated, and a size of each element may not precisely reflect the actual size thereof. Accordingly, the present disclosure is not limited by a relative size or interval illustrated in the accompanying drawings.

An example electronic device in accordance with aspects of the present disclosure may include a device including a communication function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical device, an electronic bracelet, an electronic accessory, a camera, a wearable device, an electronic clock, a wrist watch, a home appliance (for example, refrigerator, air conditioner, cleaner, oven, microwave oven, washing machine, and air cleaner), an artificial intelligence robot, a TeleVision (TV), a Digital Video Disk (DVD) player, an audio player, various types of medical devices (for example, Magnetic Resonance Angiography (MRA), Magnetic Resonance Imaging (MRI), Computed Tomography (CT), scanner, an ultrasonic device, and the like), a navigation device, a Global Positioning System (GPS) receiver, an Event Data Recorder (EDR), a Flight Data Recorder (FDR), a set-top box, a TV box (for example, Samsung HomeSyncTM, Apple TVTM, or Google TVTM), an electronic dictionary, a vehicle infotainment device, electronic equipment for a ship (for example, a navigation device for ship, a gyro compass, and the like), avionics, a security device, electronic clothes, an electronic key, a camcorder, game consoles, a Head-Mounted Display (HMD), a flat panel display device, an electronic frame, an electronic album, furniture or a part of buildings/structures having a communication function, an electronic board, an electronic signature receiving device, a wearable device, and a projector. It is understood that the foregoing is not an exhaustive list.

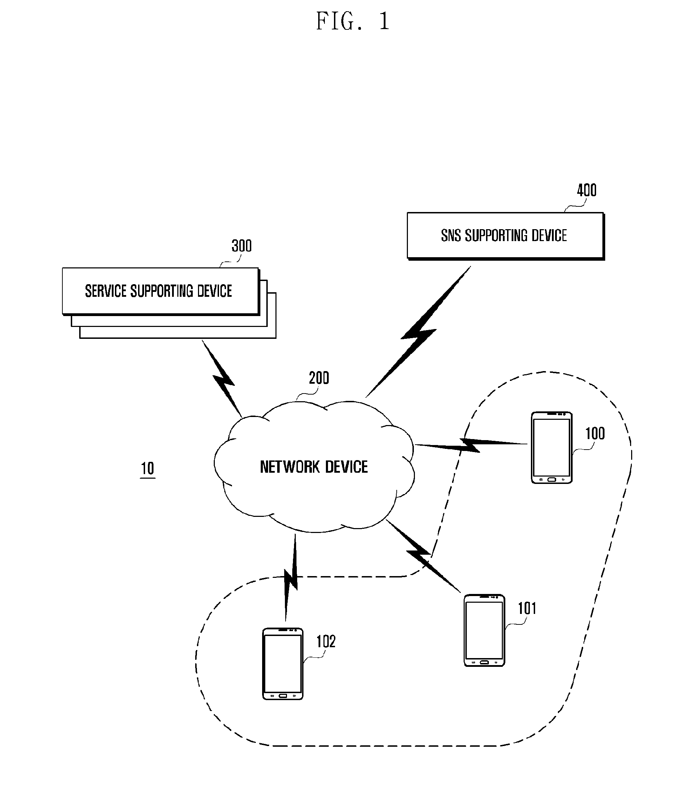

Referring to FIG. 1, an example system 10 may include at least one electronic device. For ease of illustration, FIG. 1 illustrates three electronic devices 100, 101, and 102, but it is understood that a typical network may contain any number of networked electronic devices. Furthermore, system 10 may comprise a network device 200, a service supporting device 300, and an external server device, for example, a Social Network Service (SNS) supporting device 400.

By way of example, when electronic device 100 searches for information, system 10 may provide common interest member information contained in at least one device that is remote to electronic device 100, such as electronic device 101 and 102, that is relevant to a search query entered in electronic device 100. The common interest member information may include at least one of identification information associated with each remote electronic device and activity history contained in each remote electronic device that is relevant to the search query. The activity history may include, for example, a memo or a tag message recorded in the remote electronic device relevant to the search query or purchase information relative to the search query. The search results returned may display the common interest member information in an arranged manner such that different categories are distinguishable.

The electronic device 100 may identify common interest member information of at least one of the other electronic devices 101 and 102 relevant to the search query entered in electronic device 100. Thus, the electronic device 100 may receive search results that are at least partially based on the activity history of users of electronic device 101 and 102. The system 10 may ensure the reliability of the search results by providing the user of electronic device 100 with data associated with the type of activity carried out by users of the other electronic devices. The identification information of the other electronic devices and the relevant activity history obtained therefrom may be stored in electronic device 100 or in SNS supporting device 400.

The electronic device 100 may gather and display the common interest member information comprising the activity history of the other remote electronic devices 101 and 102. When the electronic device 100 stores the common interest member information of the other electronic devices registered in a phone book and a search query is input, the electronic device 100 may obtain the common interest member information corresponding to the search query. Alternatively, the search query input in electronic device 100 may be transmitted to SNS supporting device 400 through network device 200 and SNS supporting device 400 may provide the relevant common interest member information to electronic device 100. Then, the electronic device 100 may configure and output a screen including the search results.

The electronic devices 101 and 102 may transmit search results to the service supporting device 300 and additional progress information associated with the search results to the SNS supporting device 400. The progress information may include information on reading, purchasing, or presenting a particular item on a search result screen. Further, the progress information may include evaluation information registered for a particular item being searched. The search information and the progress information may be included in the common interest member information. The common interest member information may be provided to the SNS supporting device 400. At this time, the common interest member information may be transmitted to the SNS supporting device 400 directly by the service supporting device 300 or transmitted to the SNS supporting device 400 by the electronic device 100.

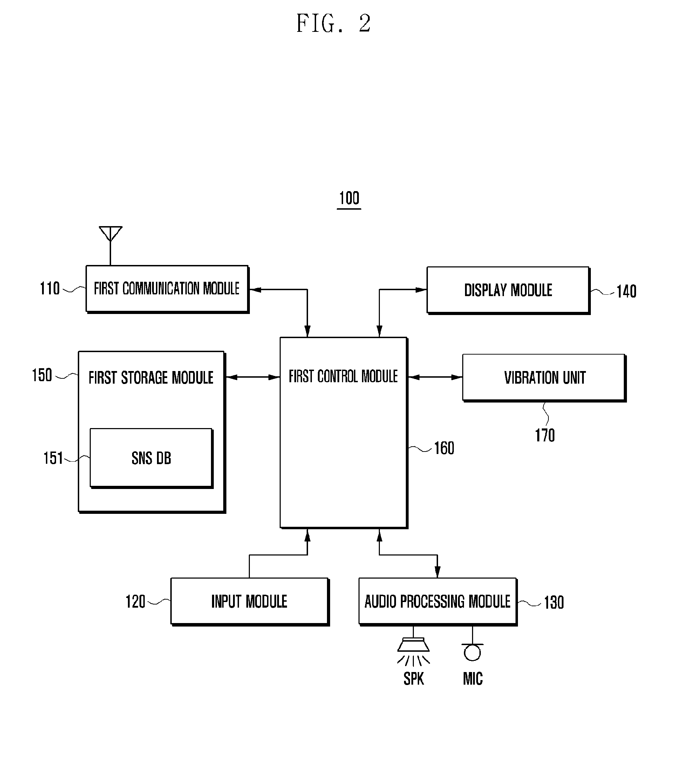

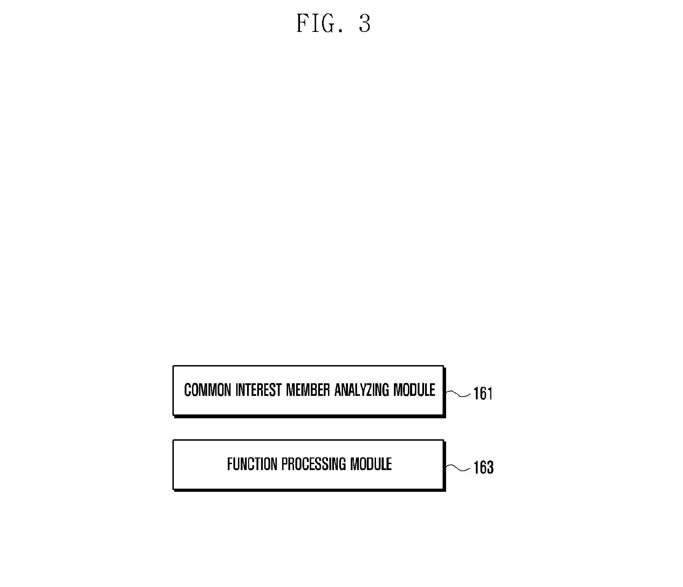

The electronic device 100 may receive the search results comprising the common interest member information from either electronic device 101 or 102 and activate a particular function while displaying the common interest member information. For example, the electronic device 100 may display an icon of an image and/or a text including identification information of another electronic device, such as electronic device 101 or 102. When the icon is selected, the electronic device 100 may make a communication connection with the other electronic device associated with the icon.. A configuration and a role of the electronic device 100 in accordance with aspects of the present disclosure will be described below in more detail with reference to FIGS. 2 and 3.

The network device 200 may include communication elements supporting signal transmission between the electronic devices 100-102, the service supporting device 300, and the SNS supporting device 400. For example, the network device 200 may include at least one base station, a base station controller, and a mobile switching center. When either one of the electronic devices 100-102 have mobility, the network device 200 may support a mobile communication function of the electronic devices by using the base station related elements. The network device 200 may include a radio access point. Alternatively, the network device 200 may include a wired communication cable. The network device 200 may include an Access Point (AP) for a WiFi communication connection. The network device 200 may include a mobile communication base station. The network device 200 may include a switching center and a router for an Internet wired connection. The network device 200 may support various communication schemes for a communication connected between devices. The network device 200 may further include device elements for compatibility between various communication schemes. As described above, the network device 200 is not limited to a particular communication scheme or device, but may be configured by at least one wired/wireless communication module to provide relevant search results.

Network device 200 may support a communication connection between the electronic devices 100-102 and the service supporting device 300. The network device 200 may transmit search results generated by anyone of the electronic devices 100-102 to the service supporting device 300. The network device 200 may receive a search result from the service supporting device 300 and transmit the search result to anyone of the electronic devices 100-102.

In a further example, network device 200 may support a communication connection between the electronic devices 100-102 and the SNS supporting device 400. The network device 200 may transmit the search information and the search result to the SNS supporting device 400. The network device 200 may transmit common interest member information provided by the SNS supporting device 400 to anyone of the electronic devices 100-102.

In yet another example, network device 200 may support a communication connection between the electronic devices 100-102. For example, when particular common interest member information output on a common interest screen of electronic device 100 is selected, the network device 200 may form a chatting channel or a call channel between the electronic device 100 and another electronic device 101 or 102 from which the common interest member information originates.

The service supporting device 300 may be connected to the network device 200 using a wired or wireless configuration. The service supporting device 300 may form a communication channel with one of the electronic devices 100-102 making a request for the connection. The service supporting device 300 may provide a search results generated by one of the electronic devices 100-102 to another one of the electronic devices 100-102. For example, the service supporting device 300 may be a web service device. Although it is illustrated that the system 10 includes only one service supporting device 300, it is understood that system 10 is not limited to this example and that additional supporting devices may be employed. For example, the service supporting device 300 may include a plurality of supporting devices in accordance with a type of a web service. The service supporting device 300 may include a news information providing device, a good sale supporting device, a movie service supporting device, a music service supporting device, and a book introduction and sale supporting device. The service supporting device 300 may provide at least one content as the search result corresponding to the search information transmitted by any one of the electronic devices 100-102. The service supporting device 300 may transmit the search results generated to the electronic device 100 or may transmit the search results to the SNS supporting device 400 together with the identification information of the electronic device 100.

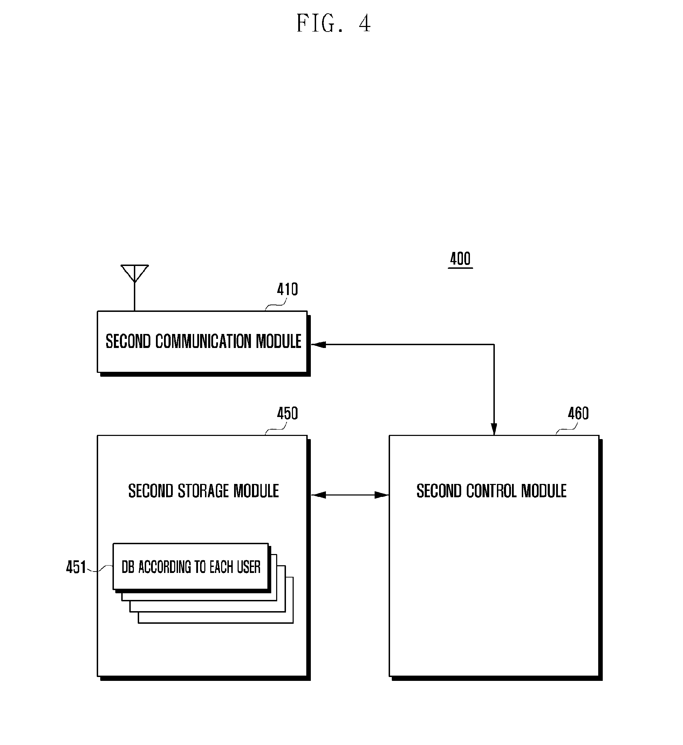

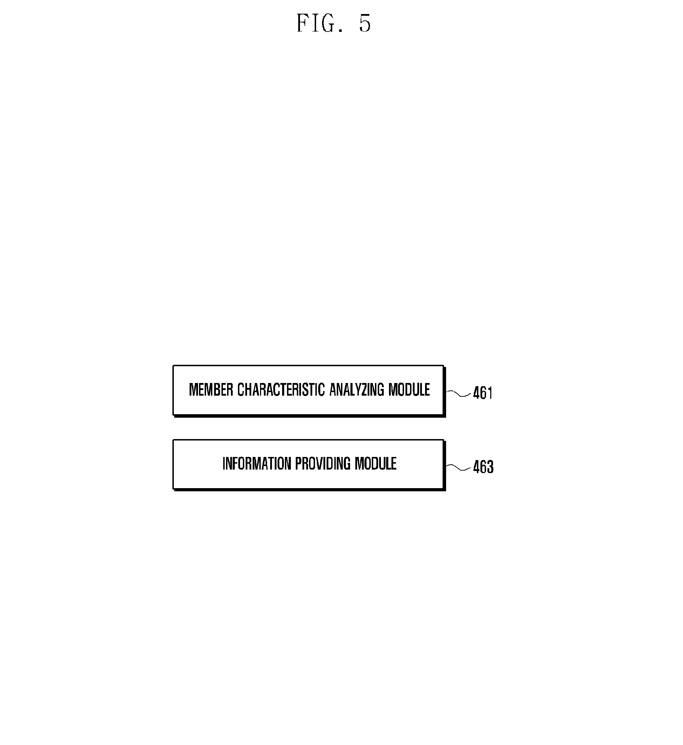

The SNS supporting device 400 may be a device supporting an SNS of at least one electronic device through the network device 200. Alternatively, the SNS supporting device 400 may be a device that routes common interest member information returned from at least one electronic device. The SNS supporting device 400 may collect and manage information of at least one electronic device. The SNS supporting device 400 may store search information and search results classified in accordance with each electronic device by analyzing collected big data. When a particular electronic device provides search results and identification information, the SNS supporting device 400 may extract common interest member information from the search results and the identification information of the electronic device that generated the search results. In turn, SNS supporting device 400 may provide the extracted common interest member information to the electronic device in which the search query was entered. A configuration and a role of the SNS supporting device 400 will be described below in more detail with reference to FIGS. 4 and 5.

As described above, when a user of a particular electronic device inputs a search query, the system 10 may provide common interest member information including identification information of at least one remote electronic device that generated the search results and activity history relevant to the search query. Further, the system 10 may gather and categorize pieces of the common interest member information in the search results. In addition, the system 10 may support a communication connection between the electronic device in which the query was entered and another electronic device from which the query results were generated.

Referring to FIG. 2, the example electronic device 100 may include a first communication module 110, an input module 120, an audio processing module 130, a display module 140, a first storage module 150, and a first control module 160.

The first communication module 110 may support a communication function of the electronic device 100. When the electronic device 100 does not support the communication function, the first communication module 110 may be omitted from the configuration of the electronic device 100. When the electronic device 100 is mobile, the first communication module 110 may be in the form of a mobile communication module. Further, the first communication module 110 may be in the form of a module which can establish a short-range communication channel. The first communication module 110 may form a communication channel with the service supporting device 300 through the network device 200. The first communication module 110 may form a communication channel with the SNS supporting device 400 through the network device 200. The first communication module 110 may transmit a search query to the service supporting device 300. The first communication module 110 may receive search results from the service supporting device 300. In another example, when common interest member information is provided by the SNS supporting device 400, the first communication module 110 may transmit search results and identification information of the electronic device 100 to SNS supporting device 400. The first communication module 110 may receive common interest member information relevant to the search query and the identification information of the electronic device that generates the common interest member information from the SNS supporting device 400. The search results including the common interest member information received by the first communication module 110 may be provided to the first control module 160.

The input module 120 may generate a signal related to an operation of the electronic device 100. The input module 120 may include hardware physical keys such as at least one key button, a side key, a home key, a menu key, a power key and the like. Further, the input module 120 may include a touch pad. When the display module 140 is prepared in the form of a touch screen supporting an input function, the display module 140 may operate as the input module 120. Input module 120 may generate an input signal making a request for the connection to the service supporting device 300 and an input signal corresponding to an input search query. In another example, input module 120 may generate an input signal selecting an item included in the common interest member information and an input signal in accordance with performance of a chatting with another electronic device corresponding to the selected search result. The generated input signal may be transmitted to the first control module 160.

The audio processing module 130 may process an audio signal generated by the operation of the electronic device 100. For example, the audio processing module 130 may output an audio signal generated during a process of reproducing a particular audio file stored in the electronic device 100 or an audio signal received from another external electronic device. The audio processing module 130 may collect an audio signal in an operation of supporting a recording function or a call function of the electronic device 100. The audio processing module 130 may output a notification sound or an effect sound informing of the connection to the service supporting device 300 or a notification sound or an effect sound informing of an output of a search result corresponding to a search query and common interest member information.

The display module 140 may output a screen related to the operation of the electronic device 100. For example, the display module 140 may provide a standby screen, a menu screen, an icon screen, a particular content outputting screen and the like. When the display module 140 is prepared in the form of a touch screen, the display module 140 may operate as an input device. The display module 140 may be in the form including a display panel, a touch panel, or a touch sheet. The display module 140 may support a finger touch, an electronic pen touch, or a general pen touch. The display module 140 may include a plurality of touch panels or touch sheets.

The display module 140 may output a screen supporting a search, a screen corresponding to the connection to the service supporting device 300, a screen corresponding to an input of a search query, and a search result screen. The search result screen may include common interest member information. The common interest member information may include identification information of another electronic device from which the search results originate. For example, the common interest member information may be output on a predetermined position of the search result screen in a predefined form. Alternatively, the common interest member information may be output by a separate popup on the search result screen. Alternatively, the common interest member information may be output on a predetermined allocated area of the same layer as a resized search result screen. Common interest member information may be output to have a correlation with each item of the search results. For example, the common interest member information may be output on an empty area in which items in the search result screen are arranged as a list.

The first storage module 150 may store data and a program related to the operation of the electronic device 100. For example, the first storage module 150 may store an operating system, at least one app and the like. The operating system may process a signal for controlling at least one app operation. At least one app may be a program corresponding to user functions provided by the electronic device 100. The at least one app may include a communication function app. The communication function app may include a call function app, a message service app, a data communication app such as a video call or web access.

The first storage module 150 may include a search app. The search app may include an internal memo search app that searches for information stored in the first storage module 150. When a search query is input, the internal search app may search for a search result relevant to the corresponding search query in the information stored in the first storage module 150 and provide the search result. The search app may include at least one global search app that performs a web search based on the service supporting device 300. In another example, when search query is input, the global search app may operate the first communication module 110 to make a communication connection with the service supporting device 300. The global search app may provide the search query to the service supporting device 300. The global search app may receive the search results from the service supporting device 300 and output the search results on the display module 140. The electronic device 100 may collect identification information of another electronic device relevant to the search query by using at least one of the internal search app and the global search app.

First storage module 150 may include an SNS DB 151. The SNS DB 151 may include list information of other electronic devices and interest information of other electronic devices. For example, the SNS DB 151 may include phone book information. The SNS DB 151 may include search queries input by other electronic devices registered in the phone book information and search result information. The queries and the search results to and from the networked electronic devices may be exchanged therebetween at regular intervals. Alternatively, the search queries and the search results to and from the electronic devices may be received by SNS supporting device 400. The SNS DB 151 may be used for displaying common interest member information from an electronic device 100-102.

The first control module 160 may control processing and transmission of a control signal and transmission and processing of data related to the operation of the electronic device 100. In another example, first control module 160 may control such that an icon or a menu item supporting a search service is displayed on the display module 140. The first control module 160 may activate a search app supporting the search service when the icon or the menu item is selected. When a query is input through the search app, the first control module 160 may collect the search results. During such an operation, the first control module 160 may collect information, such as activity history, contained in another electronic device that is relevant to the query. The first control module 160 may search for another electronic device having information relevant to the query by searching the SNS DB 151. The first control module 160 may search for another electronic device having information relevant to the query using the SNS supporting device 400. When another electronic device having relevant information is found, the first control module 160 may extract common interest member information from the electronic device and control such that the common interest member information is output on the display module 140.

In one example, when the user inputs a search query, the first control module 160 may search for results relevant to the search query based on a web service. The first control module 160 may search for and display identification information of other electronic devices on the SNS having activity history relevant to the search query in the web search result. Further, the first control module 160 may form a chatting channel or a message channel with another electronic device in accordance with a selection by the user and control such that predetermined information is transmitted therethrough. The electronic device 100 may reduce time and effort spent for finding an answer in the search results. The first control module 160 may use time information of activity history, information on a number of times a query was input, and a purchase list of items included in search results relevant to the query. The foregoing items may be used as a reference for different arrangements of the common interest member information on a common interest screen.

In one example, when an electronic device visits a particular position, the electronic device may automatically input hotspot information as a search query by using a position information collecting module. Further, the electronic device 100 may detect identification information of other electronic devices on the SNS having activity history associated with the input hotspot information. For example, identification information of another electronic device that has visited the hotspot. When common interest member information including identification information of another electronic device is selected, the first control module 160 may support a communication channel formation to immediately transmit an inquiry about the hotspot to another device. The first control module 160 may use the date time of the visit to the hotspot, information on a number of visits, search history information and the like for determining how to display the information on a search result screen for a pleasing user experience. That is, this information may be used as a reference for determining an arrangement of the common interest member information.

In one example, when the electronic device 100 collects an image by using a camera, the electronic device 100 may automatically input attribute information tagged with the collected image as a search query. For example, the search query may comprise place and time information associated with the image and may find another electronic device on the SNS having activity history relevant to the query. The first control module 160 may use photograph taking history of the other electronic devices, for example, a day and time in which a photograph was taken, a number of times photographs were taken, a size of tag data relevant to the photograph, and the like. This information may also be used to determine how to present the search results for a pleasant user experience. In particular, this information may be used as an element for determining an arrangement of the common interest member information. That is, an arrangement of the common interest member information on the screen may be changed, in accordance with the photographing activity history,

In one example, when particular music is repeatedly replayed, an electronic device may automatically input a search query comprising a title and an artist associated with the music. The first control module 160 may collect identification information of other electronic devices on the SNS having activity history relevant to the search query. Further, the first control module 160 may provide the identification information of other electronic devices having the activity history relevant to the search query. The first control module 160 supports an easy search for other electronic devices and supports a recommendation of a music file, relevant to the search query, which users of other electronic devices have purchased or reproduced. The first control module 160 may use recent reproduction time information, repetition information, search histories and the like for calculating how to present the search results.

Referring now to FIG. 3, the first control module 160 may include a common interest member analyzing module 161 and a function processing module 163.

When a search query is input, the common interest member analyzing module 161 may collect common interest member information corresponding to the input query. The common interest member analyzing module 161 may search for another electronic device having activity history relevant to the search query. The relevant activity history may be stored in the SNS DB 151 or provided by the SNS supporting device 400. The common interest member analyzing module 161 may find identification information associated with another electronic device having interest information from the SNS DB 151 or receive identification information of another electronic device having interest information from the SNS supporting device 400. The common interest member analyzing module 161 may transmit the received identification information to the function processing module 163 and include it in the common interest member information.

The common interest member analyzing module 161 may collect additional information in connection with the search information use history. For example, the common interest member analyzing module 161 may collect additional information including another electronic device having made a memo or having tagged a search result corresponding to search information, another electronic device having transmitted a search result to a different electronic device through a message, another electronic device having reproduced, purchased or presented an item included in a search result and the like. The common interest member analyzing module 161 may provide the collected additional information to the function processing module 163 as the common interest member information.

The function processing module 163 may control function processing in accordance with predefined scheduling information or input information. For example, the function processing module 163 may activate a search app when an input signal making a request for the search service is generated. The function processing module 163 may output virtual key buttons related to a search information input. When search information is input, the function processing module 163 may collect search results for the query. During such an operation, the function processing module 163 may collect, as the search results, information relevant to the search query among pieces of information stored in the first storage module 150. In one example, the function processing module 163 may make a communication connection with the service supporting device 300. The function processing module 163 may transmit the search query to the service supporting device 300. The function processing module 163 may receive search results corresponding to the search query from the service supporting device 300.

When the search results are collected, the function processing module 163 may configure a screen including the search results. The function processing module 163 may control an output of the search result screen on the display module 140. During such an operation, the function processing module 163 may receive at least one of identification information of another electronic device and additional information from the common interest member analyzing module 161. The function processing module 163 may configure a screen including the received common interest member information included in the search results. The function processing module 163 may control an output of the search result screen including the common interest member information on the display module 140. The identification information associated with an electronic device of the common interest member information may be provided in an electronic phone book. For example, the identification information of an electronic device may include at least one of a picture image, a name, a nickname, and a phone number registered in the electronic phone book.

In another example, the function processing module 163 may collectively display pieces of identification information from remote electronic devices relevant to the query in an operation of providing common interest member information. In a further example, when the search results include a plurality of items, the function processing module 163 may associate the identification information of the remote electronic devices with the items in the search results. The function processing module 163 may gather and arrange the identification information of the remote electronic devices in accordance with a position of each search result item on the screen of display module 140.

In yet another example, the function processing module 163 may process identification information such that each identifier associated with a remote electronic device is distinguishable from other identifiers. For example, the function processing module 163 may control identification information such that identification information of a remote electronic device having activity history relevant to a search query are arranged in accordance with the type of activity. The type of relevant activity history may include, but is not limited to, using digital content, purchasing of an item online, presenting an item for sale online, or entry of a memo.

Function processing module 163 may link the common interest member information in the search results with another function. For example, when specific common interest member item is selected from the search results, the function processing module 163 may form a chatting channel with the remote electronic device from which the selected item originates. In another example, when a common interest member information item is selected, the function processing module 163 may form a call channel with the remote electronic device from which the item originates. In one example, when a common interest member information item is selected, the function processing module 163 may output a menu window including items for performing a particular function related to the item.

Referring to FIG. 4, the example SNS supporting device 400 may include a second communication module 410, a second storage module 450, and a second control module 460. The SNS supporting device 400 having such a configuration may support an SNS management of at least one electronic device. For example, the SNS supporting device 400 may allocate a server page to support the SNS of electronic device 100 and allow other electronic devices 101-102 designated by electronic device 100 to use the server page. In another example, the SNS supporting device 400 may manage SNS interest information of the electronic device 100. Further, when common interest member information is generated by electronic device 101, the SNS supporting device 400 may collect common interest member information therefrom and forward it to electronic device 100.

The second communication module 410 may support a communication function of the SNS supporting device 400. When the SNS supporting device 400 is a mobile device, the second communication module 410 may have the form of a mobile communication module. When the SNS supporting device 400 is a fixed device and operates based on the Internet, the second communication module 410 may be a wired Internet communication module. Alternatively, the second communication module 410 may be a wireless Internet communication module. The second communication module 410 is not limited to a particular communication scheme. The second communication module 410 may include various types of communication schemes and communication modules which can communicate with the electronic device 100 connected through the network device 200.

In another example, the second communication module 410 may receive information from an electronic device 100-102 in connection with registration of interest information. The second communication module 410 may receive a search result which the service supporting device 300 has provided to an electronic device. This search result may contain registered interest information, from the service supporting device 300 or the electronic device from which the results originate. The second communication module 410 may receive at least one search result item in connection with the registered interest information from an electronic device. The second communication module 410 may transmit received information to the second storage module 450 in accordance with a control of the second control module 460.

In another example, the second communication module 410 may receive information from the electronic device 100 in connection with registration of common interest member information. The second communication module 410 may transmit the received search result to the second control module 460. When the common interest member information is extracted, the second communication module 410 may provide the extracted common interest member information to the electronic device in which the search query was entered.

In one example, the second communication module 410 may form a communication channel with the electronic device 100 in accordance with a request of the electronic device 100 or in accordance with a predetermined period. The second communication module 410 may transmit interest information of other electronic devices 101-102 to the electronic device 100 in accordance with a control of the second control module 460. Other electronic devices may be devices which have histories of having used the SNS with the electronic device 100 or which are included in SNS list information of the electronic device 100.

The second storage module 450 may store various programs and data related to an operation of the SNS supporting device 400. For example, the second storage module 450 may include an operating system of the SNS supporting device 400. The second storage module 450 may store an interest information management program and a common interest member information extraction program to provide the common interest member information. The interest information management program and the common interest member information extraction program may operate as a software module which has been loaded to the second control module 460 to support the management of the interest information and the extraction of the common interest member information.

The second storage module 450 may include a DB 451 that includes data associated with each user of a networked electronic device. The data in DB 451 may include interest information associated with a user of each electronic device. The interest information may include identification information of the electronic device. The identification information of the electronic device may include at least one of a picture image, an avatar, or a particular image registered by the user of the electronic device, identification code information relevant to the electronic device, phone number information relevant to the electronic device, ID information related to the electronic device, and nickname or name information related to the electronic device. Meanwhile, the interest information in accordance with each electronic device may include at least one of search query input by a particular electronic device, a search result in response to the query, and at least one of piece of item use history information included in the search result.

The second control module 460 may control processing and transmission of data related to the operation of the SNS supporting device 400. The second control module 460 may control provision of the management of the interest information and the provision of the common interest member information.

Referring now to FIG. 5, the example second control module 460 may include a member characteristic analyzing module 461 and an information providing module 463. The member characteristic analyzing module 461 may manage interest information of electronic devices. For example, the member characteristic analyzing module 461 may support subscription to a service of a new electronic device and withdrawal from the service of the joined electronic device. The member characteristic analyzing module 461 may manage a associations between electronic devices. For example, the member characteristic analyzing module 461 may manage which electronic device is associated with other electronic devices in the form of SNS. In another example, the member characteristic analyzing module 461 may manage associations with other electronic devices based on phone book information of a particular electronic device. The member characteristic analyzing module 461 may manage connection with other electronic devices connected through a particular SNS, for example, Twitter.

When the particular electronic device inputs a search query, the member characteristic analyzing module 461 may collect the search information as interest information. At this time, the search information may be automatically collected or collected in response to a command by the electronic device. The member characteristic analyzing module 461 may collect search results of the search information as interest information. The search results may also be automatically collected or collected in response to a command by the electronic device. In another example, when an item in the activity history is relevant to a search query, data associated with that item may be included in the search results. The member characteristic analyzing module 461 may collect the corresponding search information and item use information as interest information.

The member characteristic analyzing module 461 may classify pieces of interest information in accordance with an identity of each electronic device and a type of activity history. Further, the member characteristic analyzing module 461 may gather electronic devices associated with each other among the electronic devices.

The information providing module 463 may collect and provide common interest member information. For example, when the information providing module 463 may receive a search query from a particular electronic device, the information providing module 463 may find identification information of other electronic devices having interest information relevant to the search query. During such an operation, the information providing module 463 may associate certain electronic devices together so as to form a group of electronic devices. For example, the information providing module 463 may find identification information of other electronic devices having interest information similar to those of other electronic devices. These devices may include those registered in a phone book or contact information in each electronic device of the group.

In another example, the information providing module 463 may receive at least one piece of item information of a search result corresponding to a search query. The information providing module 463 may find identification information and additional information from another electronic device having interest information relevant to the query. The information providing module 463 may provide common interest member information that includes at least one of identification information and activity history of another electronic device.

During an operation of receiving the search results, the SNS supporting device 400 may update the interest information associated with the electronic device, from which the results originate, to manage the interest information and also provide the common interest member information. When the particular electronic device updates the interest information, the SNS supporting device 400 may apply the update in real time when the common interest member information is provided.

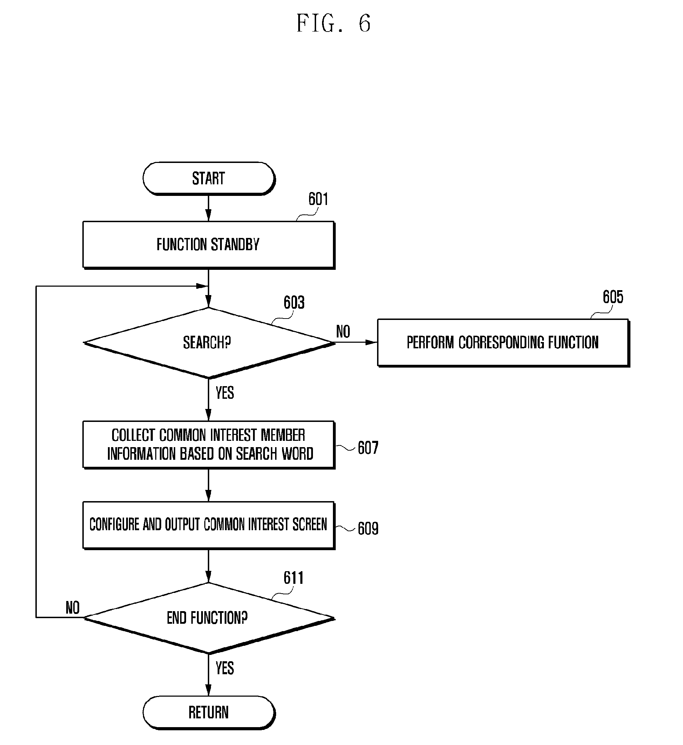

Referring to FIG. 6, an example method in accordance with aspects of the present disclosure is provided. The first control module 160 may have a function standby state in block 601. In another example, the first control module 160 may have a sleep state, when the display module 140 is turned off. In one example, the first control module 160 may maintain a function previously executed in the function standby state.

When a particular event is generated, the first control module 160 may identify whether an event related to a search has been generated in block 603. In another example, the first control module 160 may provide an icon or a menu item in connection with supporting of a search service. When the icon or the menu item related to the search service is selected, the first control module 160 may deem the selection to be a search request event.

When the event generated in block 603 is not the search related event, the first control module 160 may control performance of whichever function corresponds to the generated event in block 605. In another example, the first control module 160 may control to activate a file reproduction function or activate a broadcast reception function in accordance with a characteristic or a type of the generated event. In a further example, the first control module 160 may control a call connection or control an execution of a memo or message writing function in response to the generated event.

In block 603, when the search related event is generated, the first control module 160 may collect common interest member information relevant to a search query, in block 607. In another example, when the search related event is generated, the first control module 160 may control such that a search service screen is displayed on the display module 140. When the search query is input, the first control module 160 may collect common interest member information relevant to the search query. During such an operation, the first control module 160 may collect identification information of other electronic devices having relevant activity history and identification information associated with those devices. Such information may be included in the common interest member information. The first control module 160 may collect the common interest member information based on information stored in the first storage module 150. In yet a further example, the first control module 160 may collect common interest member information based on search results provided by the service supporting device 300.

In block 609, the first control module 160 may configure and output a common interest screen. The first control module 160 may configure the common interest screen based on the search service screen. For example, the first control module 160 may configure the common interest screen including the query and the search results. In another example, the first control module 160 may output identification information of other electronic devices from which the results originate as a text and/or an image on the common interest screen. The common interest member information may be organized on the display in accordance with a type of result and the identifier of the device from which the result originates.

In block 611, the first control module 160 may identify whether an event for ending a function has been generated. When the event for ending the function has been generated, the first control module 160 may control to return a particular function state. For example, the first control module 160 may return to a previous function operation state. In a further example, the first control module 160 may switch to a sleep state in response to the generation of the function ending event.

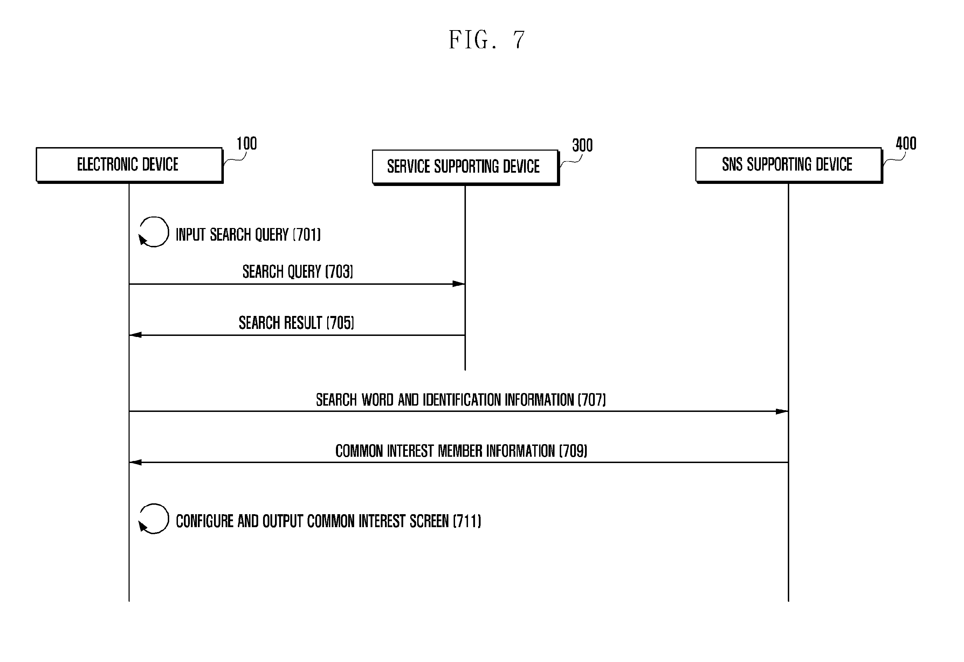

Referring to FIG. 7, an example signal flow between system components is shown. In block 701, the electronic device 100 may receive a search query. Electronic device 100 may provide an icon or a menu item through which a search service can be selected. The electronic device 100 may provide a search service screen through which the query can be entered by selecting the icon or the menu.

In block 703, the electronic device 100 may transmit the input search query to the service supporting device 300. The electronic device 100 may form a communication channel with the service supporting device 300 through the network device 200. For example, when the search query has been completely input, the electronic device 100 may automatically form the communication channel with the service supporting device 300 of particular address information. Alternatively, in response to input of the search query, the electronic device 100 may form the communication channel with a particular service supporting device 300, receive a search service screen from the service supporting device 300, and output the search service screen. The electronic device 100 may convert the input search query to a predefined data type and transmit the converted search query to the service supporting device 300.

In block 705, the electronic device 100 may receive a search result from the service supporting device 300. When the electronic device 100 transmits the search query, the service supporting device 300 may collect the search result. To this end, the service supporting device 300 may collect data including at least a part of the search query based on data pre-stored in the service supporting device 300 or stored in another connected service supporting device 300. The service supporting device 300 may arrange data including at least a part of the search query and transmit a predetermined number of search results to the electronic device 100. A data arrangement reference may be determined differently in accordance with a policy of the service supporting device 300. For example, the service supporting device 300 may arrange data in accordance with information search orders of other users.

Meanwhile, in block 707, the electronic device 100 may transmit the search query and identification information of the electronic device to the SNS supporting device 400. In another example, the electronic device 100 may form a communication channel with the SNS supporting device 400 through the network device 200. When the search query is input, the electronic device may transmit the search query and data including identification information of the electronic device (e.g., a phone number) to the SNS supporting device 400. When the SNS supporting device 400 receives the search query and the phone number from the electronic device, the SNS supporting device 400 may find identification information of other electronic devices containing information relevant to the search query. During such an operation, the SNS supporting device 400 may search other electronic devices that are somehow associated with the phone number.

The SNS supporting device 400 may pre-store information of other electronic devices 101-102 associated with electronic device 100. The SNS supporting device 400 may pre-store and manage search queries input from electronic devices and the corresponding search results. When the SNS supporting device 400 receives the search query and the phone number from the electronic device 100, the SNS supporting device 400 may update interest information of the responding electronic devices 101-102. The SNS supporting device 400 may receive a search result from the service supporting device 300 or one of the electronic devices 101-102.

In block 709, the electronic device 100 may receive common interest member information from the SNS supporting device 400. The SNS supporting device 400 may transmit identification information of other electronic devices from which the common interest member information originates to the electronic device 100.

In one example, when the SNS supporting device 400 receives the search result from the service supporting device 300 or an electronic device, the SNS supporting device 400 may collect identification information of the electronic devices that generated the results in block 707. When the SNS supporting device 400 collects the identification information of the other search result producing electronic devices, the SNS supporting device 400 may transmit the identification information of these devices to electronic device 100 in block 709. Each identifier associated with a search result producing electronic device may be displayed so as to make each one distinguishable. In another example, item purchase information relevant to the search query may be transmitted to the SNS supporting device 400. The SNS supporting device 400 may identify other electronic devices having the relevant item purchase history in block 707. The SNS supporting device 400 may transmit identification information of these electronic devices identified in block 709 to the electronic device 100, so as to include it in the common interest member information.

In block 711, the electronic device 100 may configure and output a common interest screen. For example, the electronic device 100 may configure a common interest screen including a search query, a search result, and identification information of another electronic device. During such an operation, the identification information of the other electronic device may include at least one of information of another electronic device relevant to the search query and information of another electronic device related to at least one item included in the search result. In another example, the electronic device 100 may allocate and process output areas of information to one screen in an information outputting process. In yet another example, the electronic device 100 may output common interest member information on a particular screen through a popup window.

It is understood that the order in which blocks 701, 703, 705, 707, 709, and 711 are executed may be changed or some may be simultaneously performed. It is further understood that some blocks may be omitted in some examples or that other blocks may be added. For example, although it is illustrated that blocks 703 and 705 are performed before blocks 707 and 709, blocks 707 and 709 may be performed before blocks 703 and 705 in various examples of the present disclosure. Alternatively, In another example, blocks 703 and 707 may be simultaneously performed and blocks 705 and 709 may be simultaneously performed.

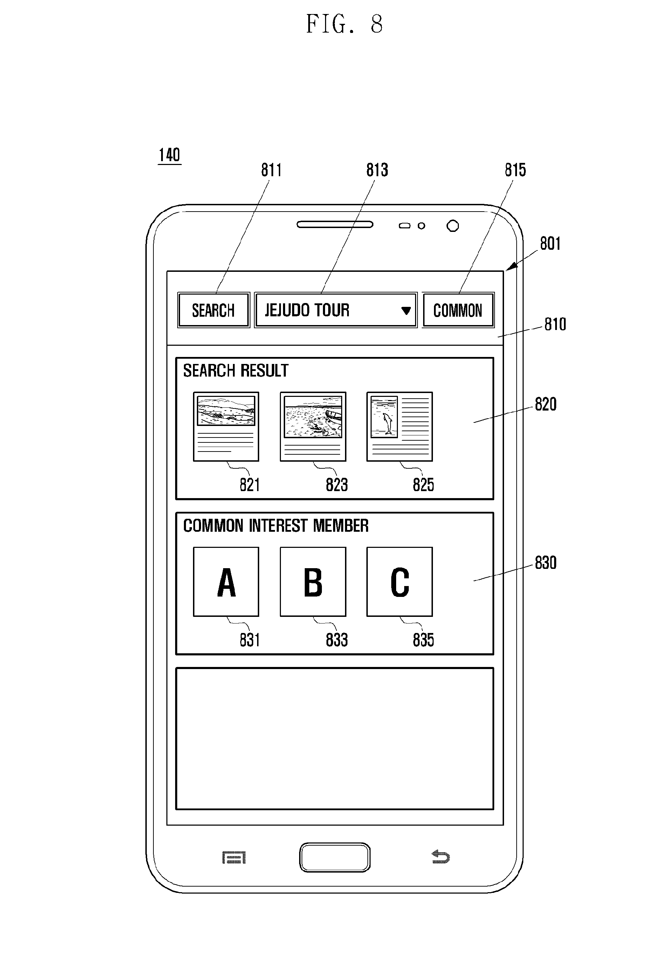

Referring now to FIG. 8, the example display module 140 may output a first common interest screen 801. The first common interest screen 801 may include a search area 810, a search result area 820, and a common interest member information area 830.

The search area 810 may include a search button area 811, a common button area 815, and a search query area 813. The search button area 811 is an area in which a virtual search button for executing a search may be located. When the display module 140 is configured by a touch screen and a touch event is generated on the search button area 811, the first control module 160 may search for information related to a search query input into the search query area 813. In another example, when the search button area 811 is selected, the electronic device 100 may collect a search result by only searching for search query related information. In one example, when the search button area 811 is selected, the electronic device 100 may search for the search query related information and also search for identification information of other electronic devices containing information relevant to the search query.

The search query area 813 may be an area in which an input search query or a search query selected from recommended queries is output. For example, when an input signal corresponding to "Jejudo tour" is received, the display module 140 may output a text "Jejudo tour" in the search query area 813.

The common button area 815 may be an area in which a virtual button making a request for common interest member information is located. In one example, when an event for selecting the common button area 815 is generated, the electronic device 100 may collect only common interest member information including identification information of other electronic devices containing information relevant to the search query typed into search query area 813. During such an operation, the electronic device 100 may not search for information on the search query.

When the search button area 811 is selected in the search area 810, the search result area 820 may be executed. In another example, the electronic device 100 may provide generation of the input signal for executing the search in another form. For example, the electronic device 100 may provide a search execution key on the input module 120. Further, the electronic device 100 may insert the virtual button for executing the search into a virtual keypad for inputting a character and provide the virtual keypad. When the search query is input into the search query area 813, the electronic device 100 may search for information relevant to the search query and output a search result in the search result area 820. For example, when the search query "Jejudo tour" is input, at least one search result items 821, 823, and 825 may be output in the search result area 820. The search result items 821, 823, and 825 may be at least one of a text, an image, and an audio file. When the item is selected, the electronic device 100 may expand and display the selected item. Alternatively, the electronic device 100 may switch the screen to a screen including the selected item.

The common interest member information area 830 may include pieces of common interest member information 831, 833, and 835 including at least one of identification information of other electronic device from which the information originated. For example, the pieces of common interest member information 831, 833, and 835 may include identification information of other electronic devices having activity history related to the information. During such an operation, identification information associated with a remote electronic device whose activity is highly relevant to the search query may be distinguishably displayed. For example, the common interest member information 831 located at the front of the common interest member information area 830 may include identification information of another electronic device having a history of having input "Jejudo tour" as a search query. The common interest member information 833 may include identification information of another electronic device having a history of having input "Jejudo" as the search query. The common interest member information 835 may include identification information of another electronic device having a history of having input "tour" as the search query. Accordingly, since the electronic device having the history of having input "Jejudo tour" is most relevant, its associated identifier may be displayed most prominently.

In another example, the pieces of common interest member information 831, 833, and 835 corresponding to the identification information of other electronic devices located in the common interest member information area 830 may be arranged as the search results. For example, the common interest member information 830 may include identification information of another electronic device having a correlation with a first item 821. In a further example, when another electronic device corresponding to the common interest member information 831 has a history of having purchased the first item 821 or a history of having made a memo or tag for the first item 821, the common interest member information 831 may be arranged in line with the first item 821. For example, the common interest member information 831 may be vertically aligned with the first item 821. At this time, in order to express a correlation between the first item 821 and the common interest member information 831, an image effect such as the same type of highlight or translucent line or the same marking may be additionally provided. The common interest member information 833 may include identification information of another electronic device having a correlation with a second item 823. The common interest member information 835 may include identification information of another electronic device having a correlation with a third item 825.

The pieces of common interest member information 831, 833, and 835 output in the common interest member area 830 may be connected to particular functions. For example, when an event for selecting the common interest member information 831 is generated, the electronic device 100 may perform a communication connection with another electronic device from which the common interest member information 831 originated. During such an operation, the electronic device 100 may form a chatting channel with this electronic device. Alternatively, the electronic device 100 may perform a call connection with this electronic device. In connection with supporting the call connection, each of the pieces of common interest member information may include a phone number of another electronic device or chatting connection ID information.

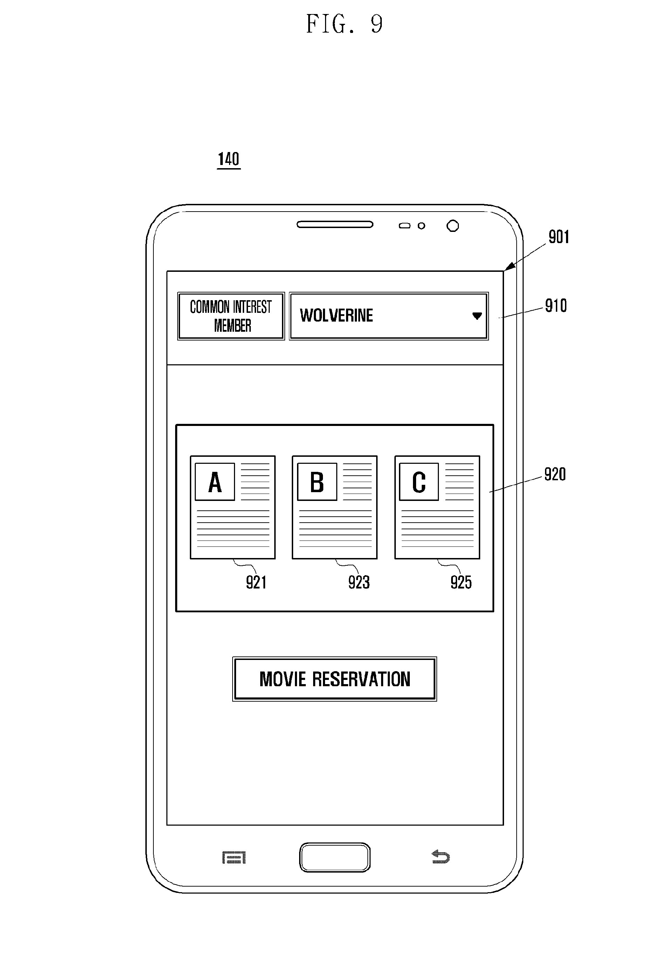

Referring to FIG. 9, the example display module 140 may output a second common interest screen 901. The second common interest screen 901 may include a search screen area 910 and a common interest area 920.

The search screen area 910 may be, for example, a movie reservation search screen. The electronic device 100 may form a communication channel with the service supporting device 300 that supports a movie reservation search in response to a user's request. The service supporting device 300 may provide a movie reservation search screen to the electronic device 100. The electronic device 100 may output a search result of a search query input into a search query area to a search screen area 910. The search screen area 910 may include a search query area, a common interest search button area, and a movie reservation execution area.

Meanwhile, when "Wolverine" is input into the search query area of the search screen area 910 as the search query and then the common interest search button area is selected, the electronic device 100 may search for identification information of another electronic device with activity history relevant to the search query "Wolverine". During such an operation, the electronic device 100 may automatically collect a search query "movie" in the corresponding search service screen as well as the search query "Wolverine". Further, the electronic device 100 may collect identification information of another electronic device with activity history relevant to the search queries "Wolverine" and "movie" as common interest member information.

After collecting all the identification information of other electronic devices having a history related to "Wolverine", the electronic device 100 may arrange the identification information in accordance with a predetermined condition. For example, the electronic device 100 may give a relatively high priority to identification information of another electronic device having a relevant history of "movie, Wolverine, purchase history, and memo writing history". The electronic device 100 may give a next high priority to identification information of another electronic device having a relevant history of "movie, Wolverine, and purchase history". The priority items may be changed in accordance with a device design method. In the example of FIG. 9, three pieces of common interest member information 921, 923, and 925 may be arranged in the common interest area 920. Arrangement orders of the pieces of common interest member information 921, 923, and 925 may be determined in accordance with the above described priority.

The common interest member information 921, 923, and 925 output in the common interest area 920 may include at least one of an information providing function and a communication connecting function. For example, when the common interest member information 921 is selected, the electronic device 100 may output identification information of another electronic device included in the common interest member information 921 and memo information made by another electronic device. In one example, when the common interest member information is selected, the electronic device 100 may control to form a chatting channel or a call connection with another electronic device corresponding to the common interest member information 921. In one example, when the common interest member information 921 is selected, the electronic device 100 may output additional information of another electronic device. The additional information may include information on a time and place where the user watches the movie. The above described functions may be applied to other common interest member information and each of the functions may be provided to a menu item when a particular item is selected. For example, when the common interest member information 921 is selected, the electronic device 100 may provide a menu window including "a chatting connection item, a call connection item, a memo information view item, and an additional information view item". Further, the electronic device 100 may control performance of a function in accordance with the selected item.

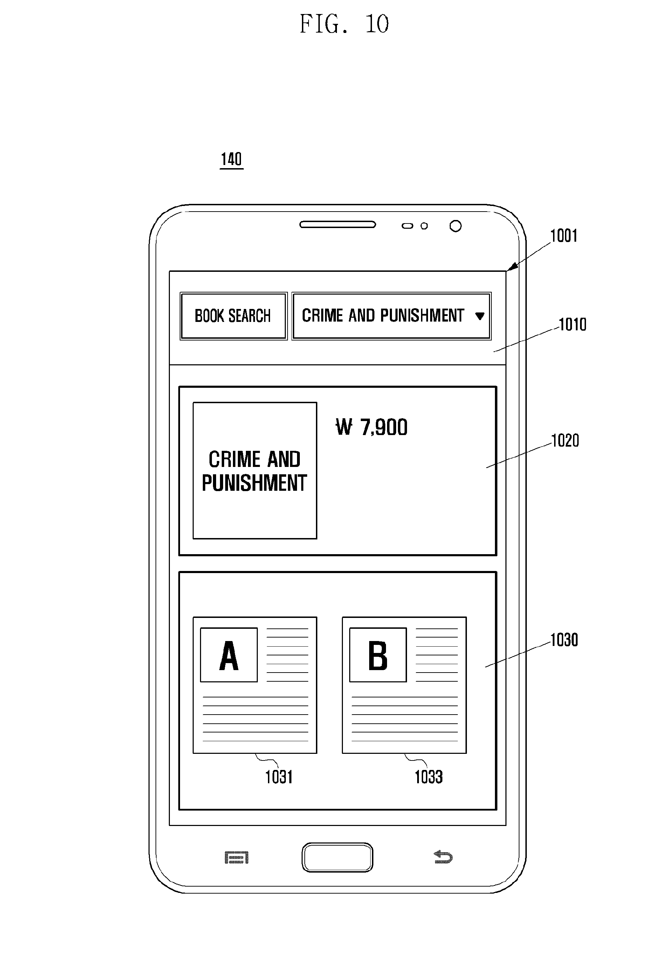

Referring to FIG. 10, the display module 140 may output a third common interest screen 1001. The third common interest screen 1001 may include a search area 1010, a search result area 1020, and a common interest member information area 1030. The third common interest screen 1001 may be a screen supporting a book search and purchase service.

The search area 1010 may include a book search button area and a book search query area. When a search query is input through at least one of a virtual key button and the input module 120, the search query may be output in the book search query area. In the working example of FIG. 10, "Crime and Punishment" may be displayed in the book search query area in accordance with a user input or a recommend information selection. When a book selection button is selected, the electronic device 100 may search for information on a book search query.

A search result corresponding to the input book search query may be output in the search result area 1020. In the working example of FIG. 10, the search result area 1020 may display information on a book having a title of "Crime and Punishment" as the search result.

The common interest member information area 1030 may output identification information of other electronic devices related to the book search query as common interest member information 1031 and 1033. At this time, the electronic device 100 may extract a characteristic of the corresponding search service screen other than "Crime and Punishment" input as the book search query, for example, a "book" search screen characteristic. Further, the electronic device 100 may find identification information of other electronic devices related to search query including "Crime and Punishment" and "book" as common interest member information. During such an operation, the electronic device 100 may find identification information of other electronic devices from the SNS DB 151 stored in the first storage module 150. Alternatively, the electronic device 100 may provide the search query to the SNS supporting device 400 and receive identification information of other electronic devices relevant to the search query from the SNS supporting device 400.

The pieces of common interest member information 1031 and 1033 output in the common interest member information area 1030 may be identification information of other electronic devices having a relevant history of the search query "Crime and Punishment" and the search query "book". The common interest member information 1031 may be identification information of another electronic device having a relevant history of "Crime and Punishment", "book", and "purchase history". The common interest member information 1033 may be identification information of another electronic device having a relevant history of "Crime and Punishment", "book", and "reading history". The pieces of common interest member information 1031 and 1033 may be distinguished and displayed in accordance with the type of activity history. The common interest member information 1031 and 1033 may be displayed with interest information on an image output on the display module 140 to allow the user to intuitively recognize.

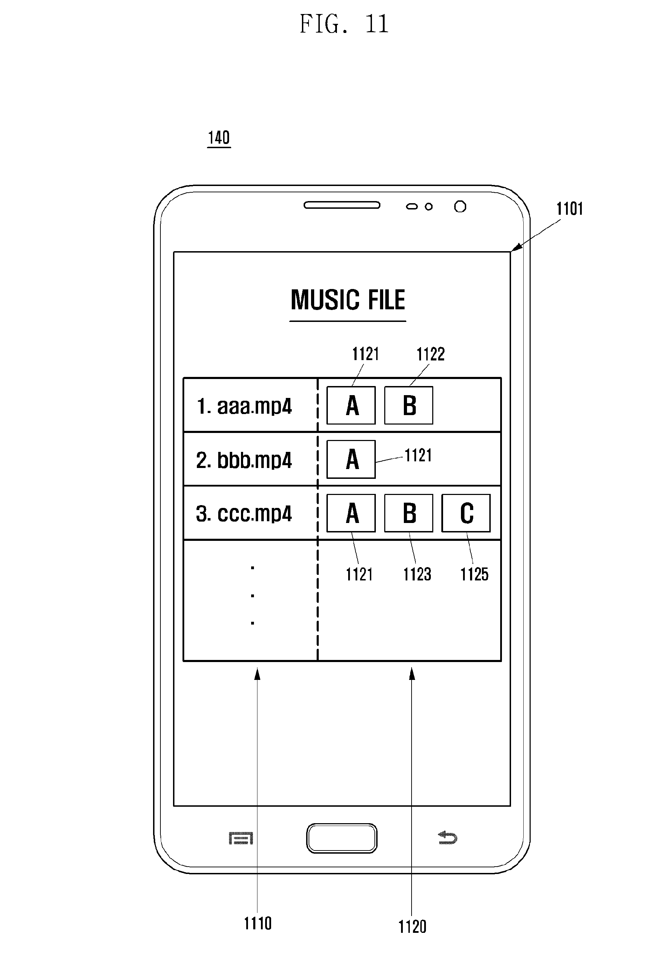

Referring to FIG. 11, another working example of a display module 140 may output a fourth common interest screen 1101. The fourth common interest screen 1101 may include a list area 1110 and a common interest list area 1120.

The list area 1110 may be, for example, an area in which at least one found music file is located. When a search query related to a music file search is input, the electronic device 100 may search for a music file related to the input search query. During such an operation, the electronic device 100 may search for a music file stored in the first storage module 150 or music files provided by the service supporting device 300. Further, the electronic device 100 may output search result as shown in the list area 1110. Although FIG. 11 describes the music file search as an example, various examples of the present disclosure are not limited thereto. The music files may be replaced with a dynamic image file or a picture file. Alternatively, the music file may be replaced with a text file.

The common interest list area 1120 may be an area outputting pieces of common interest member information 1121, 1122, 1123, and 1125 corresponding to items located in the list area 1110. For example, common interest member information related to the item "aaa.mp3" of the list area 1110 may include common interest member information 1121 and common interest member information 1122. The pieces of common interest member information 1121 and 1122 may include at least one of identification information of another electronic device and relevant history information of another electronic device. Meanwhile, common interest member information related to the second item "bbb.mp3" may include the common interest member information 1121. Common interest member information related to the third item "ccc.mp3" may include the pieces of common interest member information 1121, 1123, and 1125.

The pieces of common interest member information 1121, 1122, 1123, and 1125 outputting in the common interest list area 1120 may be distinguished from each other even though the pieces of information indicate the same electronic devices. For example, the common interest member information 1122 related to the item "aaa.mp3" and the common interest member information 1123 related to the item "ccc.mp3" may be displayed distinguishably from each other. The common interest member information 1122 may have only a history that another corresponding electronic device has reproduced the item "aaa.mp3". The common interest member information 1123 may have a history that another corresponding electronic device has purchased the item "ccc.mp3". Accordingly, in spite of the same identification information of another electronic device, an output form of the identification information in the common interest list area 1120 may vary depending on a relevant history of the corresponding electronic device. The different display form in accordance with the relevant history may be equally applied to different pieces of common interest member information.

Advantageously, identification information associated with remote electronic devices with activity history relevant to a particular search query may be provided. During such an operation, the user of an electronic device in which the query was entered may easily recognize which remote electronic device has activity history relevant to the query by displaying intuitive information on a search screen. Furthermore, the electronic device in which the query was entered may easily communicate with the remote devices having the relevant history by forming a communication channel therebetween (e.g., a chatting channel, a call, etc.). In a further example, the electronic device may easily identify a relevant history of another electronic device through different display arrangements that highlight and rank the relevant history.

The above-described electronic device may further include various additional modules. For example, when the electronic device is a communication device, the electronic device may further include elements which have not been described above, such as a short-range communication module for short-range communication, an interface for transmitting and receiving data in a wired communication scheme or a wireless communication scheme of the electronic device, an Internet communication module for communicating with an Internet network and performing an Internet function, a digital broadcasting module for performing a function of receiving and reproducing a digital broadcast signal and the like. Although all such components may not be listed since modifications thereof are diversely made in accordance with a convergence trend of digital devices, components equivalent to the aforementioned components may be further included in the devices. Also, a particular component may be excluded from the above-described configuration or may be replaced by another component.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101. The functions and process steps herein may be performed automatically or wholly or partially in response to user command. An activity (including a step) performed automatically is performed in response to executable instruction or device operation without user direct initiation of the activity.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

Although the disclosure herein has been described with reference to particular examples, it is to be understood that these examples are merely illustrative of the principles of the disclosure. It is therefore to be understood that numerous modifications may be made to the examples and that other arrangements may be devised without departing from the spirit and scope of the disclosure as defined by the appended claims. Furthermore, while particular processes are shown in a specific order in the appended drawings, such processes are not limited to any particular order unless such order is expressly set forth herein; rather, processes may be performed in a different order or concurrently and steps may be added or omitted.

## Claims

1. A method of providing search relevant information, the method comprising:
detecting input of a search query;
obtaining identification information of at least one remote electronic device having activity history stored therein that is relevant to the search query;
gathering common interest member information corresponding to the identification information of the at least one remote electronic device; and
displaying search results based on the common interest member information.

2. The method of claim 1, wherein obtaining the identification information comprises at least one of:
obtaining the identification information of the at least one remote electronic device from contact information stored in a storage module; and
requesting an external server device for the identification information, and receiving the identification information from the external server device.

3. The method of claim 1, further comprising one of:
forming a chatting channel with a remote electronic device from which a search result item originates, when the search result item is selected;
forming a call channel with a remote electronic device from which a search result item originates, when the search result item is selected; and
displaying a menu item that permits selection of other functions related to the common interest member information, when a search result corresponding to the common interest member information of the remote electronic device is selected.

4. The method of claim 1, wherein displaying the search results comprises displaying the common interest member information on a search result screen using a popup window.

5. The method of claim 1, wherein displaying the search results comprises one of:
displaying the common interest member information based on a type of the activity history;
arranging the results based on different categories of activty history relevant to the search query; and
displaying the common interest member information in an arrangement based at least partially on a time in which the search query was input and the activity history, the activity history including at least one of a list of items purchased, datettime information of a hotspot connection, number of connections to the hotspot, search history information, datetime of a photograph, number of photographs, size of a tag assocaited with the photograph, recent playback of music relevant to the search query, and repetition information.

6. An electronic device comprising:
a processor to:
detect input of a search query using an input module;
obtain identification information associated with at least one remote electronic device having stored therein activity history relevant to the query; and
configure common interest member information corresponding to the identification information of the at least one remote electronic device; and
display search results on a dislpay module, the search results comprising the common interest member information.

7. The electronic device of claim 6, wherein the processor to further:
transmit the search query and identification information of the electronic device to an external server device; and
detect receipt of the identification information associated with the remote electronic device having the activity history relevant to the search query from the external server device.

8. The electronic device of claim 7, wherein the processor to further:
transmit the search query to a service supporting device;
detect receipt of a search result corresponding to the search query from the service supporting device;
transmit the search results to the external server device; and
detect receipt of the identification information associated with the remote electronic device having the activity history relevant to at least one item included in the search result from the external server device.

9. The electronic device of claim 6, wherein the processor to further store the identification information of the remote electronic device and the activity history relevant to the remote electronic device in a storage module.

10. The electronic device of claim 9, wherein the processor to further extract the identification information of the remote electronic device from the storage module based on the search queries and the search results.

11. The electronic device of claim 6, wherein the processor to further arrange and display the search results in accordance with different categories of activity information relevant to the search query.

12. The electronic device of claim 6, wherein the processor to form a chatting channel with the remote electronic device from which a search result item originates, when the search result item corresponding to common interest member information is selected.

13. The electronic device of claim 6, wherein the processor to form a call channel with the remote electronic device from which a search result item originates, when the search result item corresponding to common interest member information is selected.

14. The electronic device of claim 6, wherein the processor to display a menu item that permits selection of other functions associated with the common interest member information, when a search result corresponding to the common interest member information is selected.

15. The electronic device of claim 6, wherein the processor to display and arrange the common interest member information so as to distinguish each category of the common interest member information.
